**Europäisches Patentamt**

**European Patent Office**

**Office européen des brevets**

(19)

(11) Veröffentlichungsnummer: **0 223 009 B1**

## EUROPÄISCHE PATENTSCHRIFT

(12)

(45) Veröffentlichungstag der Patentschrift: **31.07.91**

(51) Int. Cl.⁵: **G01D 5/38**

(21) Anmeldenummer: **86112833.8**

(22) Anmeldetag: **17.09.86**

(54) Lichtelektrische Positionsmesseinrichtung.

(30) Priorität: **21.11.85 DE 3541199**

(43) Veröffentlichungstag der Anmeldung:
**27.05.87 Patentblatt 87/22**

(45) Bekanntmachung des Hinweises auf die
Patenterteilung:
**31.07.91 Patentblatt 91/31**

(84) Benannte Vertragsstaaten:
**AT CH DE FR GB IT LI NL SE**

(56) Entgegenhaltungen:
**EP-A- 0 163 362       DE-A- 2 316 248**
**DE-B- 1 084 928       GB-A- 2 070 766**
**US-A- 3 482 107       US-A- 4 461 083**

**J. WILHELM: "DREIGITTERSCHRITTGEBER",**
**1978, Seite 65**

(73) Patentinhaber: **Dr. Johannes Heidenhain
GmbH**
**Dr.-Johannes-Heidenhain-Strasse 5 Postfach
1260**
**W-8225 Traunreut(DE)**

(72) Erfinder: **Michel, Dieter, Dipl.-Ing.**
**Langauenstrasse 12**
**W-8220 Traunstein(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung bezieht sich auf eine lichtelektrische Positionsmeßeinrichtung nach dem Oberbegriff des Anspruches 1.

Positionsmeßeinrichtungen, die mit Phasengittern arbeiten, sind beispielsweise aus der DE-B-15 48 707 und der DE-A-23 16 248 bekannt.

Aus der US-A-4,461,083 ist eine Abtasteinrichtung bekannt, bei der die Abtastplatte zwei zueinander phasenverschobene Teil-Abtastfelder zur Richtungserkennung aufweist.

Ferner zeigt Seite 65 der Dissertation an der Technischen Universität Hannover, 1978, "Dreigitterschrittgeber" von J. Willhelm die Signalgewinnung aus zwei Abtastfeldern, wobei durch zwei entgegengesetzt geneigte Keile die Sinus- und Cosinus-Signallichtflüsse getrennt werden.

Des weiteren wird in der nicht vorveröffentlichten europäischen Patentanmeldung Nr. 163362 der Anmelderin eine Positionsmeßeinrichtung beschrieben, bei der vorgeschlagen wird, eine Phasenverschiebung zwischen den am Indexgitter gebeugten Strahlenbündeln dadurch zu erzeugen, daß bei gegebener Gitterkonstante die Breite eines Steges des als Phasengitter ausgebildeten Indexgitters von der Breite einer Furche abweicht, daß also das Steg-/Furche-Verhältnis von 1:1 abweicht.

Mit Hilfe der mittels eines solchen Phasengitters gewonnenen - zueinander phasenverschobenen - Teilstrahlenbündeln verschiedener Ordnungen kann die Richtung der Relativverschiebung zwischen dem Maßstabgitter und dem Indexgitter ermittelt werden.

Die Modulationsgrade der Signale nullter und ± erster Ordnung in Auflicht-Phasengittermeßsytemen mit parallel angeordnetem Index- und Maßstabgitter mit ungleich breiten Stegen bzw. Furchen des Indexgitters sind allerdings unterschiedlich und ändern sich bei Abstandsänderung, Verschmutzung des Gitters etc. ungleich.

Dies ist bedingt durch das Dreigitter-Abtastprinzip und die unvermeidbare geometrisch-optische Abbildung der Lichtquelle auf den Photodetektor der nullten Ordnung.

Die unterschiedlichen Änderungen der Modulationsgrade führen zur ungenauen und/oder unsicheren elektronischen Auswertung der Signale.

Der Erfindung liegt die Aufgabe zugrunde, bei Positionsmeßeinrichtungen dieser Art die Empfindlichkeit gegenüber Abstandsänderungen, Abweichungen von der Parallelität der Gitter, Verschmutzung und dgl. zu verringern.

Diese Aufgabe wird durch eine Positionsmeßeinrichtung mit den Merkmalen des Anspruchs 1 gelöst.

Die Vorteile der erfindungsgemäßen Positionsmeßeinrichtung liegen in der einfachen Erzeugung der phasenverschobenen Abtastsignale zur Richtungserkennung in Verbindung mit der einfachen Erzeugung von Gegentaktsignalen und deren elektrischer Zusammenfassung zur Kompensation von Abtaststöreinflüssen.

In den Unteransprüchen sind vorteilhafte Ausgestaltungen der Erfindung angegeben.

Mit Hilfe von Ausführungsbeispielen soll die Erfindung anhand der Zeichnungen noch näher erläutert werden, wobei die Darstellungen zum besseren Verständnis stark vereinfacht wurden.

Es zeigt

Figur 1   eine schematische Darstellung einer Meßeinrichtung im Auflicht arbeitend;

Figur 2   ein Abtastgitter in vergrößerter Ansicht aus Richtung II von Figur 1;

Figur 3   ein nochmals vergrößerter Ausschnitt eines Phasengitters gemäß Figur 2 als Fragment;

Figur 4a   nochmals die Darstellung aus Figur 1;

Figur 4b   eine um 90° gedrehte Ansicht der Meßeinrichtung aus Figur 4a, mit Prismen;

Figur 4c   eine Variante der in Figur 4b dargestellten Meßeinrichtung mit dezentrierten Linsen.

Der im folgenden verwendete Ausdruck "Licht" umfaßt ultraviolette und infrarote Strahlung sowie die im sichtbaren Bereich liegende Strahlung.

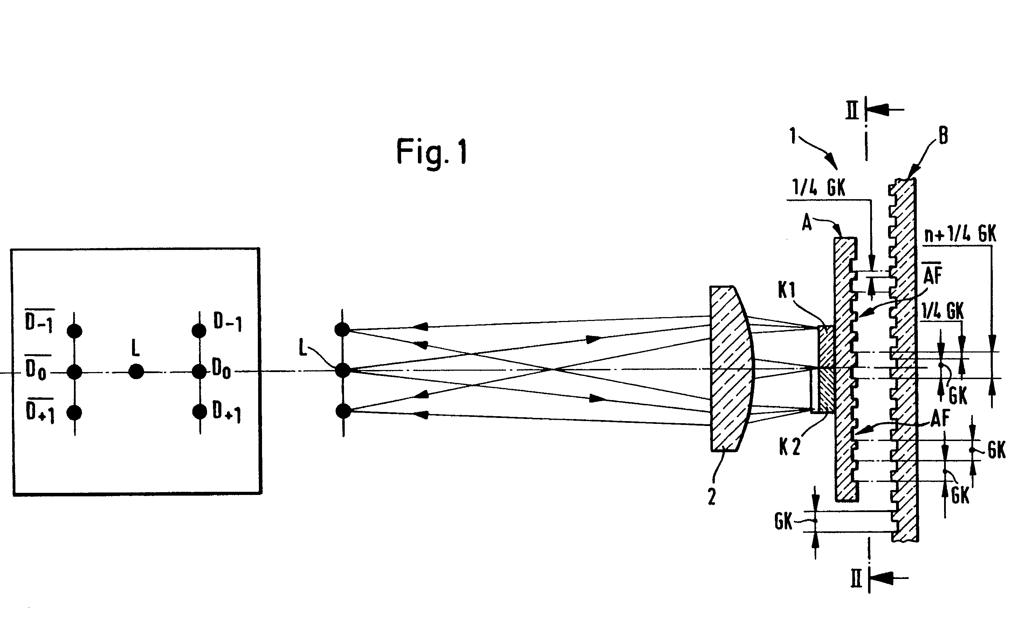

In Figur 1 ist eine Längenmeßeinrichtung 1 nach dem sogenannten Dreigitter-Auflichtprinzip dargestellt. Die Strahlung einer Lichtquelle L wird von einem Kondensor 2 kollimiert und an Phasengittern A und B gebeugt und reflektiert.

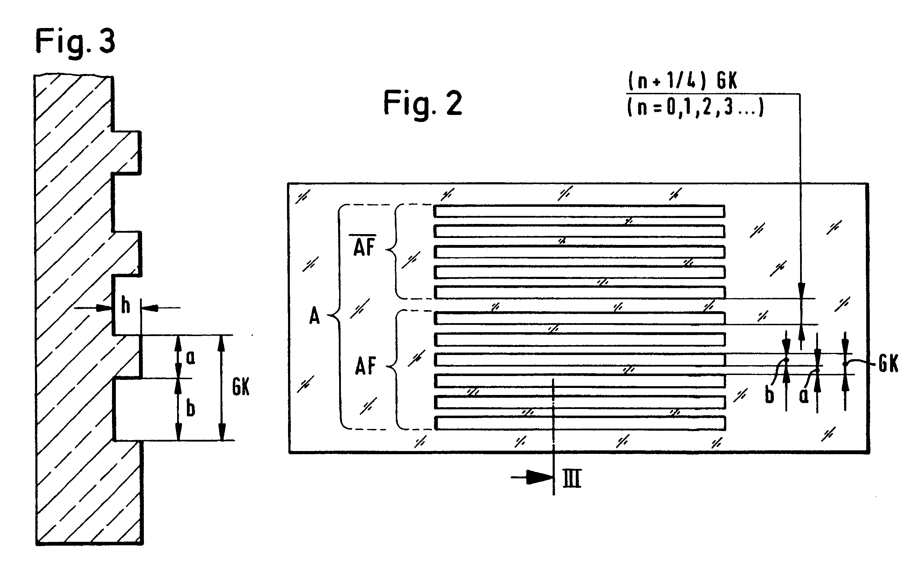

Beim Phasengitter B ist das Verhältnis von Stegbreite zu Furchenbreite 1:1; es stellt das Maßstabgitter dar. Das Abtastgitter A wird von zwei als Phasengitter ausgebildeten Abtastfeldern AF und $\overline{AF}$ gebildet. Im Gegensatz zum Maßstabgitter B weicht das Steg-/Furchenbreiten-Verhältnis a:b der Abtastfelder AF und $\overline{AF}$ von 1:1 ab, was besonders aus den Figuren 2 und 3 gut ersichtlich ist.

Dabei ist zu beachten, daß die Phasengitter des Maßstabgitters B und des Abtastgitters A die gleiche Gitterkonstante GK haben. Das Maßstabgitter B und das Abtastgitter A sind parallel zueinander angeordnet und das Maßstabgitter B ist in dieser parallelen Ebene senkrecht zum Verlauf der Teilungsmarkierungen verschieblich.

Die von der Lichtquelle L ausgehende Strahlung wird von dem in Lichtrichtung ersten (Abtast)-gitter A und vom zweiten (Maßstab)-gitter B gebeugt und am Abtastgitter A wiedervereinigt und zur Interferenz gebracht.

Bei gleicher Gitterkonstante GK des Maßstabgitter B und des Abstastgitters A unterscheiden sich - wie bereits erwähnt - bei diesen beiden Gittern die Steg-/Furchenbreiten-Verhältnisse. Beim Maßstabgitter B ist das Steg-/Furchenbreiten-Verhältnis 1:1, beim Abtastgitter beträgt es beispielsweise 1:1,5. Diese Maßnahme führt dazu, daß die gebeugten Teilstrahlenbündel verschiedener Beugungsordnungen in ihrer Phasenlage gegeneinander verschoben sind.

In der Brennebene des Kondensors 2 befinden sich Photodetektoren D0, D+1, D-1 und $\overline{D0}$, $\overline{D+1}$, $\overline{D-1}$, die entsprechend der Beugungstheorie an Gittern justiert sind, und in Figur 1 - in die Zeichnungsebene geklappt - links von der Meßeinrichtung gezeigt sind.

Aus den phasenverschobenen Teilstrahlenbündeln, die auf die Photodetektoren D-1, D0, D+1, fallen, läßt sich die Richtung der Relativbewegung zwischen dem Abtastgitter A und dem Maßstabgitter B bestimmen, was durch das von 1:1 abweichende Steg-/Furchenbreiten-Verhältnis des Abtastgitter A ermöglicht wird (s. Fig. 3).

Das Abtastgitter A ist ferner mit selektiv wirkenden optischen Mitteln K1, K2 versehen, die es im Zusammenwirken mit den zwei Abtastfeldern AF und $\overline{AF}$ ermöglichen, zu den vorgenannten Teilstrahlenbündeln gegenphasige Teilstrahlenbündel zu erzeugen.

Die Abtastfelder AF und $\overline{AF}$ sind dazu in Meßrichtung um einen Bruchteil, beispielsweise um 1/4 der Gitterkonstante GK zueinander versetzt. Den einzelnen Abtastfeldern AF bzw. $\overline{AF}$ sind Prismen K2 bzw. K1 zugeordnet, die die Teilstrahlbündel gegensinnig ablenken.

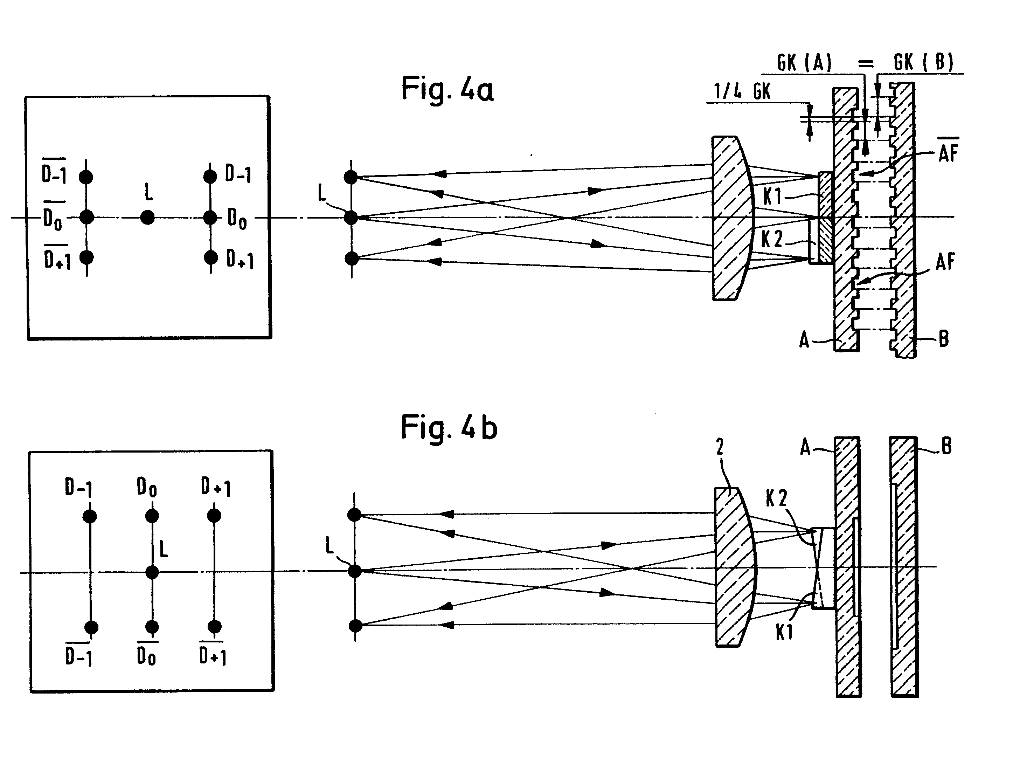

Diese Maßnahme ist in den Figuren 4a bis 4b verdeutlicht. In Figur 4a ist dabei nochmals die aus Figur 1 bereits bekannte Positionsmeßeinrichtung dargestellt, von der in Figur 4b eine Draufsicht gezeigt ist.

Die Draufsicht in Figur 4b zeigt, daß die beiden Prismen K1 und K2, die den Abtastfeldern $\overline{AF}$ und AF zugeordnet sind, die gegenphasigen Teilstrahlenbündel auf die zugehörigen Photodetektoren $\overline{D0}$, $\overline{D+1}$, $\overline{D-1}$ und D0, D+1, D-1 lenken. Die Anordnung der Photodetektoren $\overline{D0}$, $\overline{D+1}$, $\overline{D-1}$ und D0, D+1, D-1 zeigt jeweils der linke Teil der Figuren 4a und 4b, wobei die Brennebene des Kondensors 2 jeweils in die Zeichnungsebene geklappt wurde. In der Realität liegt sie senkrecht zur Zeichnungsebene.

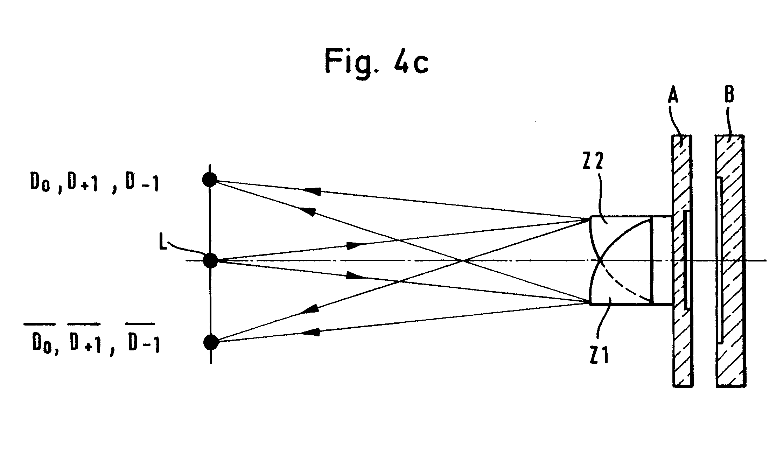

Eine besonders vorteilhafte Ausführungsform der Erfindung ist in Figur 4c gezeigt, die ebenfalls stark schematisiert wurde. Hier werden zwei gegensinnig dezentriert angeordnete Linsen Z1 und Z2 den Abtastfeldern $\overline{AF}$ und AF zugeordnet, um das Licht zu kollimieren und auf die entsprechenden Photodetektoren $\overline{D0}$, $\overline{D+1}$, $\overline{D-1}$; D0, D+1, D-1 abzulenken. Da die Lage der genannten Photodetektoren prinzipiell der Darstellung von Figur 4b entspricht, wurde auf eine separate Zeichnung verzichtet. Durch die beschriebene Anordnung der dezentrierten Linsen Z1 und Z2 kann der Kondensor entfallen.

In der Auswahl der selektiv wirkenden optischen Mittel ist der Fachmann durch die aufgeführten Beispiele nicht eingeschränkt. So ist es ins Belieben des Fachmannes gestellt, daß er die Prismen oder die dezentrierten Linsen nicht gegensinnig justiert, sondern entsprechende optische Bauelemente auswählt, die zwar gleichsinnig ablenken, jedoch unterschiedliche Ablenkwinkel aufweisen. Als selektiv wirkende optische Mittel sind in diesem Sinne besonders gut Echelettegitter mit unterschiedlicher Gitterkonstante und/oder Auslenkrichtung geeignet.

Desgleichen können die selektiv wirkenden optischen Mittel durch Bauelemente mit unterschiedlichen spektralen und/oder polarisationsoptischen Eigenschaften gebildet werden, worauf selbstverständlich die Photodetektoren abgestimmt sein müssen.

Des weiteren liegt es im Ermessen des Fachmannes, die Techniken der Faseroptik für die Beleuchtung und die Photodetektoren anzuwenden.

Durch die geometrische Gestaltung der Abtastfelder AF und $\overline{AF}$ (Steg-/Furchenbreiten-Verhältnis a:b und Furchentiefe h) kann die Phasenverschiebung zwischen D+1 und D-1 genau, z.B. auf $90^\circ$ eingestellt werden.

Durch antiparalleles Zusammenschalten der Photodetektoren D+1 mit $\overline{D+1}$ und D-1 mit $\overline{D-1}$ wird ein Gegentaktsignal erzeugt.

Besondere Vorteile ergeben sich hinsichtlich des Wirkungsgrades, wenn die nullte Ordnung mit ausgewertet wird. Zur Erzeugung der $0^\circ$-Signales werden dazu die Photodetektoren D0 und $\overline{D0}$ antiparallel geschaltet. Eine stabile Phasenverschiebung von $90^\circ$ zum $0^\circ$-Signal erhält man, wenn aus der antiparallelen Zusammenschaltung der Photoelemente D+1 mit $\overline{D+1}$ und der antiparallelen Zusammenschaltung von D-1 mit $\overline{D-1}$ die Differenz gebildet wird. Fehler des Abtastgitters A wirken sich bei einer derartigen Auswertung nicht mehr stark aus.

## Patentansprüche

1. Lichtelektrische Positionsmeßeinrichtung (1) mit einer Beleuchtungseinrichtung (L, 2), bei der eine Meßteilung (B) und ein Abtastgitter (A) von parallel zueinander angeordneten und relativ zueinander verschieblichen Gittern (A, B) gleicher Gitterkonstanten (GK) gebildet werden, wobei das Abtastgitter (A) wenigstens zwei, in Meßrichtung um einen Bruchteil der Gitterkonstanten (GK) zueinander verschobene Abtastfelder (AF, $\overline{AF}$) aufweist, dadurch ge-

kennzeichnet, daß wenigstens eines der Gitter - vorzugsweise das Abtastgitter (A) - als Phasengitter derart ausgebildet ist, daß mittels einem von 1:1 abweichenden Verhältnis (a:b) von Stegbreite (a) zu Furchenbreite (b) des Phasengitters (A) phasenverschobene Teilstrahlenbündel verschiedener Beugungsordnungen zur Erkennung der Bewegungsrichtung erzeugt werden können, daß Detektoren (D-1, D0, D + 1) zum Empfang der gebeugten Teilstrahlenbündel vorgesehen sind und daß den zueinander verschobenen Abtastfeldern (AF, $\overline{\text{AF}}$) selektiv wirkende optische Mittel (K1, K2; Z1, Z2) zugeordnet sind, so daß zu den vorgenannten gebeugten Teilstrahlenbündeln weitere gebeugte Teilstrahlenbündel erzeugt werden, die zu den vorgenannten Teilstrahlenbündeln jeweils im wesentlichen gegenphasig sind, und daß sowohl den vorgenannten gebeugten Teilstrahlenbündeln als auch den dazu gegenphasigen Teilstrahlenbündeln jeweils eigene Detektoren (D0, D + 1, D-1 bzw. $\overline{\text{D0}}$, $\overline{\text{D+1}}$, $\overline{\text{D-1}}$) optisch zugeordnet sind.

2. Lichtelektrische Positionsmeßeinrichtung nach Anspruch 1, dadurch gekennzeichnet, daß die Abtastfelder (AF, $\overline{\text{AF}}$) um (n + 1/4)•GK- (n = 0,1,2,3,...) der Gitterkonstante (GK) in Meßrichtung zueinander versetzt sind.

3. Lichtelektrische Positionsmeßeinrichtung nach Anspruch 1 und 2, dadurch gekennzeichnet, daß den Abtastfeldern (AF, $\overline{\text{AF}}$) als selektiv wirkende optische Mittel Prismen (K1, K2) zugeordnet sind.

4. Lichtelektrische Positionsmeßeinrichtung nach Anspruch 3, dadurch gekennzeichnet, daß die Prismen (K1, K2) gegensinnig ablenkend den Abtastfeldern (AF, $\overline{\text{AF}}$) zugeordnet sind.

5. Lichtelektrische Positonsmeßeinrichtung nach Anspruch 1 und 2, dadurch gekennzeichnet, daß den Abtastfeldern (AF, $\overline{\text{AF}}$) als selektiv wirkende optische Mittel dezentriert angeordnete Linsen (Z1, Z2) zum Kollimieren und Ablenken des Lichtes zugeordnet sind.

6. Lichtelektrische Positionsmeßeinrichtung nach Anspruch 1 und 2, dadurch gekennzeichnet, daß den Abtastfeldern (AF, $\overline{\text{AF}}$) als selektiv wirkende optische Mittel Echelettegitter für unterschiedliche Auslenkrichtungen zugeordnet sind.

## Claims

1. Photoelectric position measuring device (1) with an illuminating device (L, 2), in which a measuring graduation (B) and a sensing grating (A) are formed by gratings (A, B) with the same grating constants (GK) arranged parallel to one another and displaceable relative to one another, wherein the sensing grating (A) has at least two sensing fields (AF, $\overline{\text{AF}}$) displaced relative to one another by a fraction of the grating constant (GK), characterized in that at least one of the gratings - preferably the sensing grating (A) - is so formed as a phase grating that phasedisplaced component ray bundles of different diffraction orders can he created for recognition of the direction of movement, by means of a ratio (a:b) of land width (a) to groove width (b) differing from 1:1. In that detectors (D-1, D0, D + 1) are provided for receiving the diffracted component ray bundles and in that the sensing fields displaced relative to one another (AF, AF) have selectively acting optical means (K1, K2; Z1, Z2) associated therewith, so that diffracted component ray bundles further to the aforesaid diffracted component ray bundles are created, with substantially the opposite phase in each case to the aforementioned diffracted component ray bundles, and in that both the aforesaid diffracted component ray bundles and also the component ray bundles of opposite phase thereto have their own optically associated detectors (D0, D + 1, D-1, or $\overline{\text{D0}}$, $\overline{\text{D+1}}$, $\overline{\text{D-1}}$) in each case.

2. Photoelectric position measuring device according to claim 1, characterized in that the sensing fields (AF, $\overline{\text{AF}}$) are displaced relative to each other in the measuring direction by (n + 1/4).GK (n = 0,1,2,3,...) of the grating constant (GK).

3. Photoelectric position measuring device according to claims 1 and 2, characterized in that the sensing fields (AF, $\overline{\text{AF}}$) have associated prisms (K1, K2) as selectively acting optical means.

4. Photoelectric position measuring device according to claim 3, characterized in that the prisms (K1, K2) are associated with the sensing fields (AF, $\overline{\text{AF}}$) with opposite deflections.

5. Photoelectric position measuring device according to claims 1 and 2, characterized in that the sensing fields (AF, $\overline{\text{AF}}$) have associated lenses (Z1, Z2) arranged off-centre as selectively acting means, for collimating and deflecting the light.

6. Photoelectric position measuring device according to claims 1 and 2, characterized in that the sensing fields (AF, $\overline{AF}$) have associated echelette gratings for different deflection directions as selectively acting optical means.

**Revendications**

1. Dispositif de mesure de position (1) photoélectrique comportant un dispositif d'éclairage (L, 2), dans lequel une graduation de mesure (B) et un réseau de lecture (A) sont formés par deux réseaux (A, B) de même constante de réseau (GK) disposés parallèlement et pouvant se déplacer l'un par rapport à l'autre, le réseau de lecture (A) présentant au moins deux champs de lecture (AF, $\overline{AF}$) décalés d'une fraction de la constante de réseau (GK) dans la direction de mesure, caractérisé en ce que au moins l'un des réseaux - de préférence le réseau de lecture (A) - est réalisé sous forme de réseau de phase, de manière telle que des faisceaux de rayons partiels déphasés d'ordres de diffraction différents sont produits au moyen d'un rapport (a:b) de la largeur de barette (a) à la largeur de creux (b) du réseau de phase (A) différent de 1:1 pour déterminer le sens de déplacement, en ce que des détecteurs (D-1, D0, D+1) sont prévus pour recevoir les faisceaux de rayons partiels diffractés, et en ce que des moyens optiques (K1, K2 ; Z1, Z2) agissant de manière sélective sont associés aux champs de lecture (AF, $\overline{AF}$) décalés l'un par rapport à l'autre, de sorte qu'en plus des faisceaux de rayons partiels diffractés mentionnés précédemment, d'autres faisceaux de rayons partiels diffractés sont produits, qui sont essentiellement en opposition de phase avec les faisceaux de rayons partiels mentionnés précédemment, et en ce que des détecteurs propres (D0, D+1, D-1 et $\overline{D0}$, $\overline{D+1}$, $\overline{D-1}$) sont associés optiquement respectivement aux faisceaux de rayons partiels diffractés mentionnés précédemment et aux faisceaux de rayons partiels en opposition de phase avec ceux-ci.

2. Dispositif de mesure de position photoélectrique selon la revendication 1, caractérisé en ce que les champs de lecture (AF, $\overline{AF}$) sont décalés l'un par rapport à l'autre de (n + 1/4) x GK- (n = 0,1,2,3,....) de la constante de réseau (GK) dans la direction de mesure.

3. Dispositif de mesure de position photoélectrique selon les revendications 1 et 2, caractérisé en ce que les champs de lecture (AF, $\overline{AF}$) sont associés à des prismes (K1, K2) comme moyens optiques sélectifs.

4. Dispositif de mesure de position photoélectrique selon la revendication 3, caractérisé en ce que les prismes (K1, K2) sont associés aux champs de lecture (AF, $\overline{AF}$) en assurant la déviation dans des directions opposées.

5. Dispositif de mesure de position photoélectrique selon les revendications 1 et 2, caractérisé en ce que des lentilles (Z1, Z2) décentrées agissant comme moyens optiques sélectifs sont associées aux champs de lecture (AF, $\overline{AF}$) pour orienter et dévier la lumière.

6. Dispositif de mesure de position photoélectrique selon les revendications 1 et 2, caractérisé en ce que des réseaux échelle agissant comme moyens optiques sélectifs sont associés aux champs de lecture (AF, $\overline{AF}$) pour des directions de déviation différentes.

# Fig.1

EP 0 223 009 B1

## Fig. 3

## Fig. 2

$\frac{(n+1/4)\ GK}{(n=0,1,2,3\ldots)}$

EP 0 223 009 B1

Fig. 4a

Fig. 4b

EP 0 223 009 B1

Fig. 4c